# EUROPÄISCHE PATENTSCHRIFT

(11) **EP 1 372 935 B1**
(45) Veröffentlichungstag und Bekanntmachung des Hinweises auf die Patenterteilung: **12.10.2005**
(21) Anmeldenummer: 02759753.3
(22) Anmeldetag: 11.03.2002
(51) Int. Cl.: B29C 47/06, B29C 47/20

(54) **VORRICHTUNG ZUR HERSTELLUNG VON DOPPELWAND-WELLROHREN**
DEVICE FOR PRODUCING DOUBLE- WALLED CORRUGATED PIPES
DISPOSITIF DE REALISATION DE TUBES ONDULES A DOUBLE PAROI

(30) Priorität: 06.04.2001 DE 10117126
(43) Veröffentlichungstag der Anmeldung: 02.01.2004
(73) Patentinhaber: UNICOR GmbH, 97437 Hassfurt (DE)
(72) Erfinder: NEUBAUER, Gerhard, 97486 Königsberg (DE)
(74) Vertreter: Köhler, Walter
(86) Internationale Anmeldenummer: PCT/DE2002/000846
(87) Internationale Veröffentlichungsnummer: WO 2002/081178

(56) Entgegenhaltungen:
- EP-A- 0 508 071
- EP-A- 0 995 579
- DE-U- 29 813 235
- US-A- 3 743 456

## Beschreibung

Die Erfindung betrifft eine Vorrichtung zur Herstellung von Doppelwand-Wellrohren mit einem gewellten Außenrohr und einem glatten Innenrohr, insbesondere von Doppelwand-Wellrohren mit einem Nenndurchmesser von ≤ 40 mm, mit einer Extrusionsdüse und einem vor der Extrusionsdüse vorgesehenen Kühldorn, die in einen durch Korrugator-Formbacken gebildeten Formkanal hineinragen, wobei die Korrugator-Formbacken entlang des Formkanals mit einer Vakuumquelle verbindbar sind, die Extrusionsdüse einen ersten Düsenkanal mit einer ersten Ringdüsenöffnung und einen zweiten Düsenkanal mit einer zweiten Ringdüsenöffnung aufweist, die erste Ringdüsenöffnung zur Ausgabe einer Außenhaut vorgesehen ist, die zur Ausbildung des gewellten Außenrohres im Formkanal an die gewellte Querrippen-Innenfläche der Komrgator-Formbacken angesaugt wird und die zweite Ringdüsenöffnung zur Ausgabe einer Innenhaut vorgesehen ist, die zur Ausbildung des glatten Innenrohres auf den Kühldorn aufgeschoben und mit den Wellentälern der gewellten Außenhaut materialschlüssig verbunden wird, wobei die Extrusionsdüse mit mindestens einer ersten Öffnung ausgebildet ist, die in einen ersten Hohlraum zwischen der aus der ersten Ringdüsenöffnung austretenden und an die gewellte Querrippen-Innenfläche der Korrugator-Formbacken angesaugten Außenhaut und der aus der zweiten Ringdüsenöffnung austretenden und auf den Kühldorn aufgeschobenen und mit den Wellentälern der gewellten Außenhaut materialschlüssig verbundenen Innenhaut mündet, und die Extrusionsdüse mit mindestens einer zweiten Öffnung ausgebildet ist, die in einen zweiten Hohlraum zwischen der Innenhaut und dem Kühldorn und dem Innenhaut-Mundstück mündet.

Aus der EP 0 543 243 A1 ist eine Vorrichtung zur Herstellung von Doppelwand-Wellrohren bekannt, wobei die aus der ersten Ringdüsenöffnung austretende Außenhaut durch einen auf der Innenseite wirksamen Gasdruck oder durch ein auf der Außenseite wirksames Vakuum an die gewellte Querrippen-Innenfläche der Korrugator-Formbacken angeschmiegt wird. Durch das Ansaugen der aus der ersten Ringdüsenöffnung austretenden Außenhaut an die Querrippen-Innenfläche der den Formkanal bildenden Korrugator-Formbacken entsteht im Raum zwischen der Außenhaut und der aus der zweiten Ringdüsenöffnung austretenden Innenhaut ein Unterdruck, aus dem ein welliges Innenrohr resultieren kann. Um ein solches welliges Innenrohr zu vermeiden, ist bei dieser bekannten Vorrichtung das Innenhaut-Mundstück der Extrusionsdüse vom Außenhaut-Mundstück axial ausreichend weit beabstandet und mit einem Dorn-Endring und einem trichterförmigen Torpedo-Mundstück ausgebildet. Bei dieser bekannten Vorrichtung kragt das Innenhaut-Mundstück vom Außenhaut-Mundstück gleichsam frei weg, was bedeutet, daß die Kragsteifigkeit entsprechend gering ist. Eine solche geringe Kragsteifigkeit kann jedoch zu Schwingungen des Innenhaut-Mundstückes mit dem damit verbundenen Kühldorn führen. Derartige Schwingungen beeinflussen die Qualität des hergestellten Doppelwand-Wellrohres negativ, bzw. können im Extremfall zu einem Produktions-Ausschuß führen.

Eine Vorrichtung zur Herstellung von Doppelwand-Wellrohren mit einem gewellten Außenrohr und einem glatten Innenrohr, insbesondere von Doppelwand-Wellrohren mit einem großen Nenndurchmesser, ist beispielsweise aus der WO 00/07801 bekannt. Bei dieser bekannten Vorrichtung wird der Zwischenraum zwischen der Innenseite der aus einer ersten Ringdüsenöffnung austretenden Außenhaut und der Außenseite der aus einer zweiten Ringdüsenöffnung austretenden Innenhaut mit einem Überdruck beaufschlagt, um die Außenhaut im Formkanal der Korrugator-Formbacken an die gewellte Querrippen-Innenfläche der Korrugator-Formbacken anzuschmiegen. Dieser Überdruck wirkt auch auf die aus der zweiten Ringdüsenöffnung austretende Innenhaut und hat folglich ebenfalls auf die Qualität des hergestellten Doppelwand-Wellrohres Einfluß. Das gilt insbesondere, wenn ein dünnwandiges Doppelwand-Wellrohr kleineren Durchmessers hergestellt werden soll.

Die DE 43 25 021 C1 beschreibt ein Verfahren und eine Vorrichtung zur Herstellung von Kunststoff-Querripprohren mit einer Innenschicht mit einer glatten Innenrohrfläche und mit einer Außenschicht mit einer gewellten Außenoberfläche. Als Material für die Außenschicht wird dort ein nicht sortenreines gewaschenes und zerkleinertes Rezyklat verwendet, das mit einem geeigneten Treibmittel beispielsweise in einem Stopfwerk gemischt und durch einen ersten Extruder in einen Spritzkopf eingebracht wird, aus dem es vom neuwertigen Material für die rohrförmige Innenschicht getrennt und diese konzentrisch umgebend gleichzeitig austritt, wobei das Material für die Außenschicht nach dem Austritt aus dem Spritzkopf im Raum zwischen der Innenschicht und den einen Formkanal bildenden Formbacken eines Korrugators aufschäumt. Bei diesen Rippenrohren handelt es sich also nicht um hohl profilierte Doppelwand-Wellrohre mit einem gewellten Außenrohr und einem glatten Innenrohr, sondern um Rippenrohre mit einem glatten Innenrohr und einem Vollmaterial-Außenrohr mit gewellter Außenoberfläche.

Aus der DE 41 28 654 A1 ist ein mehrschichtiges Leitungsrohr aus Kunststoff und eine Vorrichtung zu dessen Herstellung bekannt. Diese bekannte Vorrichtung weist eine Extrusionsdüse und einen vor der Extrusionsdüse vorgesehenen Kühldorn auf, die in einen durch Korrugator-Formbacken gebildeten Formkanal hineinragen. Die Extrusionsdüse weist einen ersten Düsenkanal mit einer ersten Ringdüsenöffnung und einen zweiten Düsenkanal mit einer zweiten Ringdüsenöffnung auf. Die erste Ringdüsenöffnung ist zur Ausgabe einer Außenhaut vorgesehen, die zur Ausbildung des gewellten Außenrohres im Formkanal an die gewellte Querrippen-Innenfläche der Korrugator-Formbacken angesaugt oder mittels zugeführter Druckluft gegen die gewellte Querrippen-Innenfläche der Korrugator-Formbacken gepreßt wird. Die zweite Ringdüsenöffnung ist zur Ausgabe einer Innenhaut vorgesehen, die zur Ausbildung des glatten Innenrohres auf den Kühldorn aufgeschoben und im gemeinsamen Formkanal der Korrugator-Formbacken mit den Wellentälern der gewellten Außenhaut materialschlüssig verbunden wird. Kommt bei dieser bekannten Vorrichtung ein Vakuum zur Anwendung, um die Außenhaut an die gewellte Querrippen-Innenfläche der im Formkanal befindlichen Korrugator-Formbacken anzusaugen, so entsteht - wie bereits weiter oben in Verbindung mit der EP 0 543 243 A1 ausgeführt worden ist - im Raum zwischen der an die Formbacken angesaugten Außenhaut und der auf den Kühldorn aufgeschobenen Innenhaut ein Unterdruck, der zu einem unerwünscht welligen Innenrohr führen kann. Im Extremfall, bzw. bei einer dünnen Innenhaut, kann es sogar zu einem vorzeitigen Anheben der Innenhaut an oder in den Wellentälern der Außenhaut kommen, wodurch die Qualität der hergestellten Doppelwand-Wellenrohre beeinträchtigt wird oder ein Produktions-Ausschuß entstehen kann. Entsprechendes gilt bei Anwendung von Druckluft, auch hierdurch kann es zu einem unerwünscht welligen Innenrohr kommen. Außerdem ist auch bei dieser bekannten Vorrichtung der Kühldorn an der Extrusionsdüse freikragend angebracht, so daß während der Produktion der Doppelwand-Wellrohre Schwingungen des Kühldorns oftmals nicht zu vermeiden sind. Solche Schwingungen beeinträchtigen die Qualität der hergestellten Doppelwand-Wellrohre entsprechend, wie bereits erwähnt worden ist.

Die obigen Ausführungen gelten für die aus der EP 0 420 019 A 2 bekannte Vorrichtung in gleicher Weise. Eine Vorrichtung zum Formen von Doppelwand-Wellrohren ist beispielsweise auch aus der DE 200 11 667 U1 bekannt. Diese bekannte Vorrichtung weist eine Extrusionsdüse und einen Formkanal auf, entlang welchem das Doppelwand-Wellrohr geformt wird. Der Formkanal ist durch Korrugator-Formbacken definiert, die entlang zweier Bahnen umlaufen und entlang eines gemeinsamen Abschnittes dieser beiden Bahnen den Formkanal bilden. Der Extrusionsdüse wird Kunststoff aus mehreren Zufuhren zugeführt. Das Kunststoffmaterial aus den Zufuhren tritt in einen gemeinsamen Durchlaß der Extrusionsdüse ein. Dieser gemeinsame Durchlaß fördert das Kunststoffmaterial zu einer ersten und einer zweiten Ringdüsenöffnung. Diese bekannte Extrusionsdüse weist einen Separator für das Kunststoffmaterial auf, der sich in Strömungsrichtung des Kunststoffmaterials vor den Ringdüsenöffnungen befindet und der festlegt, welches Kunststoffmaterial bzw. welche Quantität des Kunststoffmaterials in welche der beiden Ringdüsenöffnungen fließt. Der Separator bestimmt also, aus welcher der Zufuhren das Kunststoffmaterial kommt, das die erste und die zweiten Ringdüsenöffnung verläßt. Der Separator kann auch in den Ringdüsenöffnungen oder am stromabwärts gelegenen Ende der Ringdüsenöffnungen angeordnet sein, wie auf Seite 3, 4. Absatz dieser Druckschrift beschrieben ist.

Eine Vorrichtung zur Herstellung von Doppelwand-Wellrohren mit einem gewellten Außenrohr und einem glatten Innenrohr ist beispielsweise auch in der DE 298 13 235 U1 beschrieben. Diese bekannte Vorrichtung weist eine Extrusionsdüse und einen der Extrusionsdüse vorgeordneten Kühldorn auf. Die Extrusionsdüse ragt mit dem Kühldorn in einen durch Korrugator-Formbacken gebildeten Formkanal hinein. Die Extrusionsdüse weist einen ersten Düsenkanal mit einer ersten Ringdüsenöffnung und einen zweiten Düsenkanal mit einer zweiten Ringdüsenöffnung auf. Die erste Ringdüsenöffnung ist zur Ausgabe einer Außenhaut vorgesehen, die zur Ausbildung des gewellten Außenrohres im Formkanal an die gewellte Querrippen-Innenfläche der Korrugator-Formbacken angeschmiegt wird. Das kann durch Anlegen eines Vakuums an die gerade im Formkanal befindlichen Korrugator-Formbacken erfolgen. Zusätzlich kann Druckluft dazu verwendet werden, die aus der ersten Ringdüsenöffnung austretende Außenhaut gegen die gewellte Querrippen-Innenfläche der im Formkanal befindlichen Korrugator-Formbacken zu zwängen. Die aus dieser Vorgehensweise, d.h. aus dem angelegten Vakuum bzw. dem angelegten Überdruck sich ergebenden Mängel wurde bereits oben in Verbindung mit dem bekannten Stand der Technik erwähnt. Sie gelten hier entsprechend.

Aus der DE 24 13 878 B2 ist ein Verfahren und eine Vorrichtung zum Herstellen eines doppelwandigen Kunststoffrohres mit gewellter Außenwand und glatter Innenwand durch gleichzeitiges Extrudieren zweier konzentrischer Rohre, Verformen des Außenrohres unter Anwendung von Unterdruck durch Einsaugen zwischen im Kreislauf geführte, geteilte, sich zur Hohlform ergänzende Kokillen mit Querrillen und anschließendem Verschweißen des Innenrohres mit dem gewellten Außenrohr bekannt. Dort wird in den Raum zwischen den beiden Rohren Stützluft zugeführt, deren Druck über dem Atmosphärendruck liegt und deren Temperatur mindestens so groß wie die Erweichungstemperatur des Kunststoffes ist. Bevorzugt ist es dort, wenn auch die in den Innenraum des inneren Rohres, der gegen die Außenluft absperrbar ist, zugeführte Stützluft mit einem Druck zugeführt wird, der über dem Atmosphärendruck liegt. Die in den Raum zwischen den beiden Rohren zugeführte Stützluft wird vorzugsweise unter einem Druck zugeführt, der um etwa 10 bis 20 % über dem Atmosphärendruck liegt. Die in den Innenraum des inneren Rohres zugeführte Stützluft wird vorzugsweise unter einem Druck zugeführt, der um etwa 15 bis 30 % über dem Atmosphärendruck liegt.

Eine Vorrichtung der eingangs genannten Art ist aus der EP 0 995 579 A2 bekannt. Bei dieser bekannten Vorrichtung wird während der Produktion eines Doppelwand-Wellrohres das glatte Innenrohr während der Verbindung mit dem gewellten Außenrohr mit einem geringen Überdruck von 0,05 bis 0,15 bar über Atmosphärendruck beaufschlagt. Gleichzeitig wird auch der Raum zwischen dem glatten Innenrohr und dem damit noch nicht verbundenen gewellten Außenrohr mit einem geringen, aber höheren Überdruck von 0,2 bis 0,5 bar, ebenfalls über Atmosphärendruck, beaufschlagt, wie in Spalte 5, Zeilen 14 ff. ausgeführt ist. Das bedingt eine entsprechende Drucksteuerung.

Der Erfindung liegt die Aufgabe zugrunde, eine Vorrichtung der eingangs genannten Art zu schaffen, mit der es einfach möglich ist, insbesondere Doppelwand-Wellrohre kleinen Nenndurchmessers mit einem dünnen gewellten Außenrohr und einem dünnen glatten Innenrohr mit hoher Produktivität und hoher Qualität herzustellen.

Diese Aufgabe wird bei einer Vorrichtung der eingangs genannten Art erfindungsgemäß dadurch gelöst, daß die mindestens eine erste Öffnung ein erstes Belüftungsloch und die mindestens eine zweite Öffnung ein zweites Belüftungsloch sind, die mit einem in die Außenumgebung ausmündenden Belüftungskanal verbunden sind, wobei ein Innenhaut-Mundstück einen Endring und ein hülsenförmiges Torpedo-Mundstück aufweist, durch die eine zweite Ringdüsenöffnung bestimmt ist, das mindestens eine erste Belüftungsloch sich radial durch das Torpedo-Mundstück hindurcherstreckt, und das Torpedo-Mundstück an seinem vom Endring abgewandten rückseitigen Ende mit einer sich zu einer ersten Ringdüsenöffnung hin radial nach außen erweiternden Konusfläche und eine Außenhaut-Innenhülse an ihrem vorderseitigen Ende mit einer an die Konusfläche des Torpedo-Mundstückes angepaßten Konusstütz- und -zentrierfläche ausgebildet ist.

Die erfindungsgemäße Vorrichtung weist den Vorteil auf; daß der durch das Ansaugen der Außenhaut an die gewellte Querrippen-Innenfläche der jeweiligen im Formkanal verbindlichen Korrugator-Formbacken entstehende Unterdruck im ersten Hohlraum eliminiert wird und daß zwischen der Außenseite und der Innenseite der Innenhaut ebenfalls kein Druckunterschied vorhanden ist, d.h. daß an der Innenhaut innen- und außenseitig der Druck ausgeglichen ist, so daß eine unerwünschte Wellung der Innenhaut auf konstruktiv einfache Weise verhindert wird. Mit Hilfe der erfindungsgemäßen Vorrichtung ist es folglich möglich, Doppelwand-Wellrohre mit kleinem Nenndurchmesser von ≤ 40 mm problemlos herzustellen, wobei die Wanddicke des gewellten Außenrohres und des damit formschlüssig verbundenen glatten Innenrohres gering sein kann.

Als zweckmäßig hat es sich erwiesen, wenn bei der erfindungsgemäßen Vorrichtung die Extrusionsdüse einen zentralen Innendorn, eine den Innendorn koaxial umgebende Außenhaut-Innenhülse und die die Außenhaut-Innenhülse koaxial umgebende Außenhaut-Außenhülse aufweist, wobei durch die Außenhaut-Innenhülse ein aus der ersten Ringdüsenöffnung austretender erster Düsenkanal von einem aus der zweiten Ringdüsenöffnung ausmündender zweiter Düsenkanal getrennt ist, wobei der erste und der zweite Düsenkanal entlang der Extrusionsdüse voneinander getrennt sind, und wobei das mindestens eine erste Belüftungsloch und das mindestens eine zweite Belüftungsloch in den im zentralen Innendorn vorgesehenen Belüftungskanal münden. Die Außenhaut-Innenhülse und die Außenhaut-Außenhülse bilden hierbei ein Außenhaut-Mundstück, an dessen vorderseitiger Stirnfläche die erste Ringdüsenöffnung für die Außenhaut vorgesehen ist.

Zweckmäßigerweise ist am vorderen Endabschnitt des zentralen Innendorns der Kühldorn mit seinem rückseitigen Endabschnitt befestigt. Der Kühldorn bildet zweckmäßigerweise gleichzeitig einen Kalibrierdorn für das glatte Innenrohr des mit der erfindungsgemäßen Vorrichtung hergestellten Doppelwand-Wellrohres.

Als vorteilhaft hat es sich erwiesen, wenn am vorderen Endabschnitt des zentralen Innendorns, vom rückseitigen Ende des Kühldorns beabstandet, das die zweite Ringdüsenöffnung aufweisende Innenhaut-Mundstück befestigt ist, wobei die mindestens eine erste Belüftungsöffnung sich durch den zentralen Innendorn und durch das Innenhaut-Mundstück hindurch erstreckt und die mindestens eine zweite Belüftungsöffnung am zentralen Innendorn im Bereich zwischen dem rückseitigen Ende des Kühldorn und dem vorderseitigen Ende des Innenhaut-Mundstücks vorgesehen ist.

Erfindungsgemäß weist das Innenhaut-Mundstück einen Endring und ein hülsenförmiges Torpedo-Mundstück auf, durch die eine zweite Ringdüsenöffnung bestimmt ist. Die mindestens eine erste Belüftungsöffnung erstreckt sich erfindungsgemäß radial durch das Torpedo-Mundstück hindurch, um den ersten Hohlraum, der durch die Außenhaut und die Innenhaut und das Torpedo-Mundstück begrenzt ist, über den sich durch die Extrusionsdüse bzw. den zentralen Innendorn erstreckenden Belüftungskanal strömungstechnisch mit der Umgebung zu verbinden, so daß im genannten ersten Hohlraum ein Unterdruck und zwischen der Außen- und der Innenseite der Innenhaut eine Druckdifferenz vermieden wird.

Erfindungsgemäß ist das Torpedo-Mundstück an seinem vom Endring abgewandten rückseitigen Ende mit einer sich zur ersten Ringdüsenöffnung hin radial nach außen erweiternden Konusfläche und eine Außenhaut-Innenhülse an ihrem vorderseitigen Ende mit einer an die Konusfläche des Torpedo-Mundstücks angepaßten Konusstütz- und -zentrierfläche ausgebildet. Dadurch ergibt sich der Vorteil, daß das Innenhaut-Mundstück sowohl am zentralen Innendorn als auch am Außenhaut-Mundstück, d.h. an dessen Außenhaut-Innenhülse abgestützt sind, so daß die Kragsteifigkeit erhöht ist. Diese erhöhte Kragsteifigkeit bewirkt, daß Vibrationen des Kühldorns verhindert werden. Der ringförmige Spalt zwischen dem Kühldorn und den jeweiligen, in der Formstrecke befindlichen Korrugator-Formbacken kann in vorteilhafter Weise also sehr klein sein, ohne daß Beschädigungen der besagten Komponenten zu befürchten sind. Mit einer solchen erfindungsgemäßen Vorrichtung sind folglich sehr dünnwandige Doppelwand-Wellrohre mit hoher Produktivität herstellbar.

Bei der erfindungsgemäßen Vorrichtung hat es sich als vorteilhaft erwiesen, wenn der zentrale Innendorn an seinem vorderseitigen Endabschnitt mit einem Außengewindeabschnitt und wenn der Endring des Innenhaut-Mundstückes mit einem daran angepaßten Innengewinde ausgebildet ist und an einer Ringschulter des hülsenförmigen Torpedo-Mundstücks anliegt. Durch passendes Aufschrauben des Endrings auf den zentralen Innendorn wird das hülsenförmige Torpedo-Mundstück gegen die Außenhaut-Innenhülse d.h. das Torpedo-Mundstück mit seiner Konusfläche an der Konusstütz- und -zentrierfläche der Außenhaut-Innenhülse zentriert abgestützt. Das hülsenförmige Torpedo-Mundstück ist auf dem zentralen Innendorn vorzugsweise spaltfrei angeordnet. Der Kühldorn kann mit einem Innengewindeabschnitt auf den Außengewindeabschnitt des zentralen Innendorns aufgeschraubt sein.

Die erfindungsgemäße Vorrichtung ist relativ einfach aus wenigen Komponenten aufgebaut, die einfach und präzise zusammenbaubar sind, wobei es mit der erfindungsgemäßen Vorrichtung möglich ist, Doppelwand-Wellrohre jedes beliebigen Innendurchmessers und insbesondere Doppelwand-Wellrohre kleinen Nenndurchmessers und mit geringen Wanddicken des gewölbten Außenrohres und des glatten Innenrohres mit hoher Produktivität qualitativ hochwertig herzustellen.

Weitere Einzelheiten, Merkmale und Vorteile ergeben sich aus der nachfolgenden Beschreibung eines in der Zeichnung dargestellten Ausführungsbeispiels der erfindungsgemäßen Vorrichtung zur Herstellung von Doppelwand-Wellrohren. Es zeigen:
- Figur 1: längsgeschnitten eine Ausbildung des Spritzkopfes der erfindungsgemäßen Vorrichtung mit einer Extrusionsdüse und mit einem vor der Extrusionsdüse vorgesehenen Kühl- und Kalibrierdorn, und
- Figur 2: in einem größeren Maßstab das Detail If gemäß Figur 1, wobei auch zwei einen gemeinsamen Formkanal bildenden Korrugator-Formbacken abschnittweise gezeichnet sind.

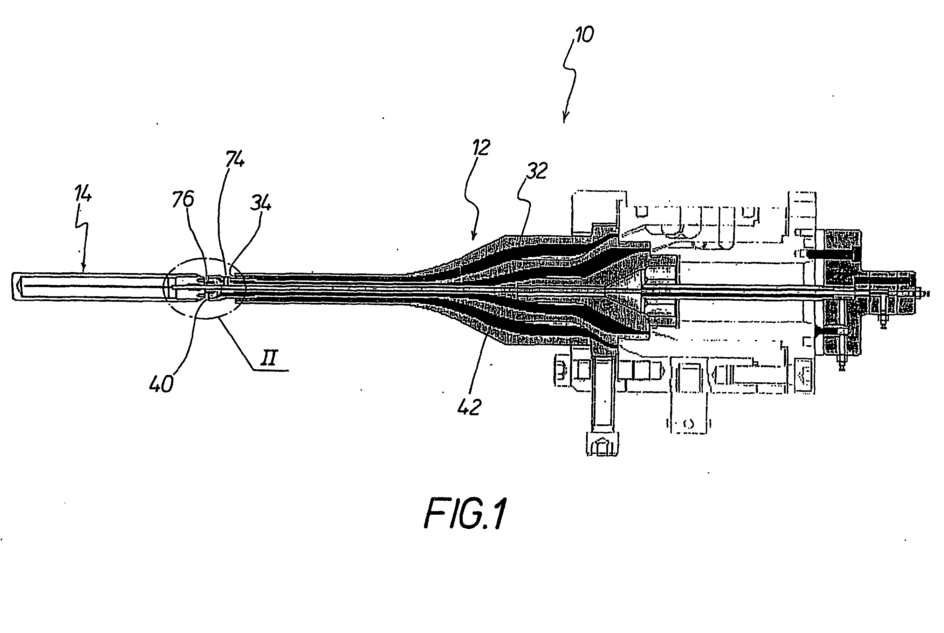

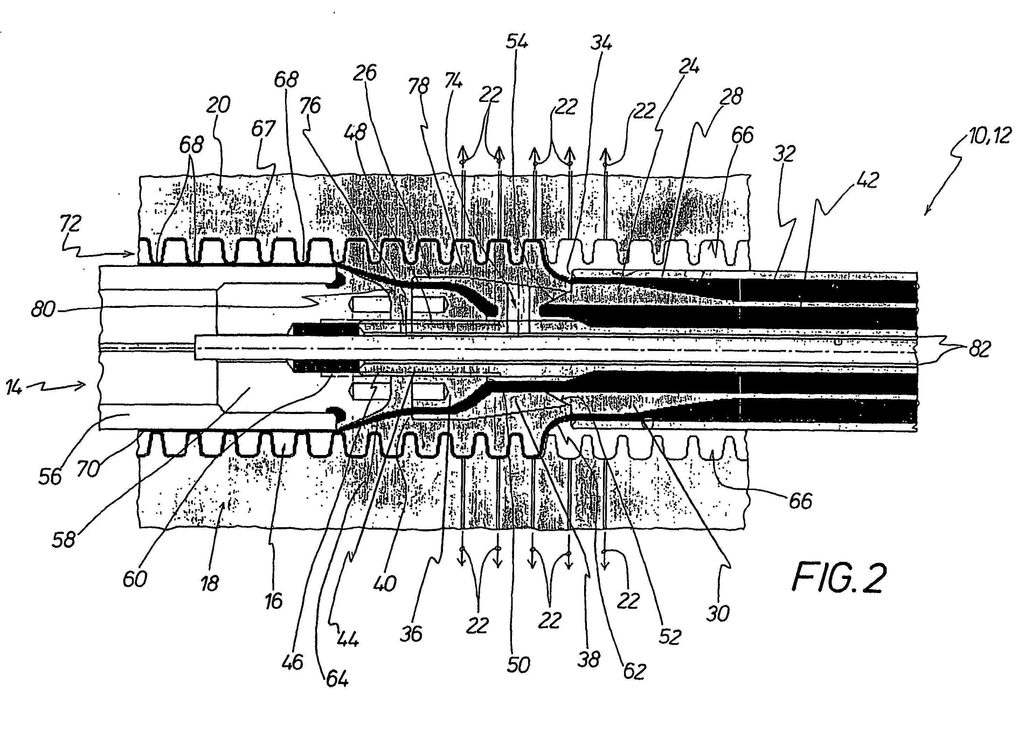

Figur 1 zeigt in einer Längsschnittdarstellung einen Spritzkopf 10 für eine Vorrichtung zur Herstellung von Doppelwand-Wellrohren. Der Spritzkopf 10 weist eine Extrusionsdüse 12 und einen vor der Extrusionsdüse 12 vorgesehenen Kühldorn 14 auf. Die Extrusionsdüse 12 und der Kühldorn 14 erstrecken sich in einen Formkanal 16 hinein, der durch Korrugator-Formbacken 18 und 20 bestimmt ist. Die Korrugator-Formbacken 18 laufen in bekannter Weise entlang einer geschlossenen Bewegungsbahn um. Entsprechend laufen die Korrugator-Formbacken 20 um eine geschlossene Bewegungsbahn um. Diese beiden Bewegungsbahnen verlaufen entlang eines bestimmten Streckenabschnitts zueinander benachbart parallel, so daß die Korrugator-Formbacken 18 und 20 entlang dieser gemeinsamen Strecke den Formkanal 16 bilden. Die Korrugator-Formbacken 18 und 20 sind entlang des Formkanales 16 mit einer (nicht gezeichneten) Vakuumquelle verbindbar. Das ist in Figur 2 durch die Pfeile 22 angedeutet.

Die Extrusionsdüse 12 weist ein Außenhaut-Mundstück 24 und ein Innenhaut-Mundstück 26 auf. Das Außenhaut-Mundstück 24 ist von einer Außenhaut-Außenhülse 28 und einer Außenhaut-Innenhülse 30 gebildet, die zueinander konzentrisch angeordnet sind. Zwischen der Außenhaut-Außenhülse 28 und der Außenhaut-Innenhülse 30 ist ein erster Düsenkanal 32 festgelegt, der sich durch die Extrusionsdüse 12 hindurcherstreckt und der aus dem Außenhaut-Mundstück 24 am vorderseitigen Ende mit einer ersten Ringdüsenöffnung 34 ausmündet.

Das Innenhaut-Mundstück 26 weist einen Endring 36 und ein hülsenförmiges Torpedo-Mundstück 38 auf. Durch den Endring 36 und das Torpedo-Mundstück 38 ist eine zweite Ringdüsenöffnung 40 definiert. Die zweite Ringdüsenöffnung 40 ist mit einem zweiten Düsenkanal 42 verbunden. Der zweite Düsenkanal 42 ist durch die Außenhaut-Innenhülse 24 und durch einen zentralen hülsenförmigen Innendorn 44 bestimmt. Der zweite Düsenkanal 42 erstreckt sich wie der erste Düsenkanal 32 durch die Extrusionsdüse 12 hindurch. Der erste Düsenkanal 32 und der zweite Düsenkanal 42 sind mit einem nicht gezeichneten Extruder verbindbar bzw. verbunden.

Der zentrale Innendorn 44 ist an seinem vorderseitigen Endabschnitt mit einem Außengewindeabschnitt 46 ausgebildet. Der Endring 36 ist mit einem Innengewinde 48 versehen und auf den Außengewindeabschnitt 46 des zentralen Innendornes 44 aufgeschraubt. Das Torpedo-Mundstück 38 ist innenseitig mit einer Schulter 50 ausgebildet. Der Endring 36 liegt im zusammengebauten Zustand an der Schulter 50 des hülsenförmigen Torpedo-Mundstückes 38 an.

Die Außenhaut-Innenhülse 30 des Außenhaut-Mundstückes 24 ist an ihrem vorderseitigen Ende mit einer Konusstütz- und -zentrierfläche 52 ausgebildet. Das hülsenförmige Torpedo-Mundstück 38 ist an seinem rückseitigen Ende mit einer sich zur ersten Ringdüsenöffnung 34 hin radial nach außen erweiternden Konusfläche 54 ausgebildet, die an die Konusstütz- und -zentrierfläche 52 der Außenhaut-Innenhülse 30 angepaßt ist.

Der Kühldorn 14 weist einen Dommantel 56 auf, der rückseitig durch einen Stopfen 58 verschlossen ist. Der Stopfen 58 ist mit einem Innengewindeabschnitt 60 ausgebildet, mit dem er auf den Außengewindeabschnitt 46 des zentralen Innendornes 44 aufgeschraubt ist. Das Innenhaut-Mundstück 26 ist nicht nur am zentralen Innendorn 44 sondern durch die Konusfläche 54 und die Konusstütz- und -zentrierfläche 52 außerdem auch am Außenhaut-Mundstück 24 festgelegt, so daß die Kragsteifigkeit wesentlich erhöht ist. Diese erhöhte Kragsteifigkeit gilt für den Kühldorn 14 entsprechend.

Die erste Ringdüsenöffnung 34 ist zur Ausgabe einer Außenhaut 62 aus extrudiertem Kunststoffmaterial und die zweite Ringdüsenöffnung 40 ist zur Ausgabe einer Innenhaut 64 aus extrudiertem Kunststoffmaterial vorgesehen. Bei den Kunststoffmaterialien für die Außenhaut 62 und für die Innenhaut 64 kann es sich um ein und dasselbe Kunststoffmaterial oder um voneinander verschiedene Kunststoffmaterialien handeln. Die aus der ersten Ringdüsenöffnung 34 ausgegebene Außenhaut 62 wird mit Hilfe des durch die Pfeile 22 angedeuteten Vakuums an die gewellte Querrippen-Innenfläche 66 der jeweils im Formkanal befindlichen Korrugator-Formbacken 18 und 20 angesaugt, um ein gewelltes Außenrohr 66 auszubilden. Die aus der zweiten Ringdüsenöffnung 40 austretende Innenhaut 64 wird auf den Kühldorn 14 aufgeschoben und entlang des Kühldornes 14 mit den Wellentälern 68 der gewellten, noch plastischen Außenhaut 62 materialschlüssig verbunden. Die Innenhaut 64 bildet sodann ein glattes Innenrohr 70 des Doppelwand-Wellrohres 72. In Vorschubrichtung stromabwärts nach der gemeinsamen Formstrecke werden die Korrugator-Formbacken 18 und 20 wieder auseinander bewegt, und das fertige Doppelwand-Wellrohr 72 aus der Vorrichtung ausgegeben. Mit Hilfe der Vorrichtung ist es also möglich, kontinuierlich d.h. gleichsam endlos ein Doppelwand-Wellrohr 72 herzustellen.

Um eine unerwünschte Wellung der Innenhaut 70 oder gar ein vorzeitiges Ankleben der Innenhaut 64 an der an die gewellte Querrippen-Innenfläche 66 der Korrugator-Formbacken 18 und 20 angesaugten Außenhaut 62 zu verhindern, weist die Extrusionsdüse 12 mindestens ein erstes Belüftungsloch 74 und mindestens ein zweites Belüftungsloch 76 auf. Das erste Belüftungsloch 74 ist mit der Außenseite der Innenhaut 64 und das mindestens eine zweite Belüftungsloch 76 ist mit der Innenseite der Innenhaut 64 fluidisch verbunden, so daß an der Innenhaut keine Druckdifferenz sondern der Druck der Umgebung wirksam ist. Das erste Belüftungsloch 74 mündet zu diesem Zwecke in einen ersten Hohlraum 78 ein, der durch die an die gewellte Querrippen-Innenfläche 66 der Korrugator-Formbacken 18 und 20 angesaugte Außenhaut 62 bis zur ersten Ringdüsenöffnung 34, die Innenhaut 64 bis zur materialschlüssigen Verbindung mit der Außenhaut 62, das Torpedo-Mundstück 38 und die Stirnseite der Außenhaut-Innenhülse 30 begrenzt ist. Das zweite Belüftungsloch 76 mündet in einen zweiten Hohlraum 80, der durch den Kühldorn 14, den zentralen Innendorn 44, den Endring 36 des Innenhaut-Mundstückes 26 und die Innenseite der Innenhaut 64 begrenzt ist. Das zweite Belüftungsloch 76 erstreckt sich im Bereich zwischen dem rückseitigen Ende des Kühldorns 14 und dem vorderseitigen Ende des Endringes 36 bzw. des Innenhaut-Mundstückes 26 durch die Wand des zentralen Innendornes 44 hindurch. Das erste Belüftungsloch 74 erstreckt sich durch die Wand des zentralen Innendorns 44 und durch das Torpedo-Mundstück 38 hindurch. Das erste und das zweite Belüftungsloch 74 und 76 sind mit einem Belüftungskanal 82 strömungstechnisch verbunden, der sich durch den zentralen Innendorn 44 erstreckt und der aus dem Spritzkopf 10 in die Umgebung ausmündet. Auf diese Weise wird der erste Hohlraum 78 und der zweite Hohlraum 80 während des Betriebes des Spritzkopfes 10 belüftet, so daß an der aus der zweiten Ringdüsenöffnung 40 austretenden Innenhaut 64 innen- und außenseitig der gleiche Druck, nämlich der äußere Luftdruck herrscht. Ein Unterdruck an der Außenseite der Innenhaut 64 und somit eine daraus möglicherweise resultierende Welligkeit des Innenrohres 70 infolge der Ansaugung der Außenhaut an die Formbacken 18 und 20 wird verhindert.

## Patentansprüche

1. Vorrichtung zur Herstellung von Doppelwand-Wellrohren (72) mit einem gewellten Außenrohr (67) und einem glatten Innenrohr (70), insbesondere von Doppelwand-Wellrohren (72) mit einem Nenndurchmesser von ≤ 40 mm, mit einer Extrusionsdüse (12) und einem vor der Extrusionsdüse (12) vorgesehenen Kühldorn (14), die in einen durch Korrugator-Formbacken (18, 20) gebildeten Formkanal hineinragen, wobei die Korrugator-Formbacken (18, 20) entlang des Formkanals (16) mit einer Vakuumquelle verbindbar sind, die Extrusionsdüse (12) einen ersten Düsenkanal (32) mit einer ersten Ringdüsenöffnung (34) und einen zweiten Düsenkanal (42) mit einer zweiten Ringdüsenöffnung (40) aufweist, die erste Ringdüsenöffnung (34) zur Ausgabe einer Außenhaut (62) vorgesehen ist, die zur Ausbildung des gewellten Außenrohres (67) im Formkanal (16) an die gewellte Querrippen-Innenfläche (66) der Korrugator-Formbacken (18, 20) angesaugt wird und die zweite Ringdüsenöffnung (40) zur Ausgabe einer Innenhaut (64) vorgesehen ist, die zur Ausbildung des glatten Innenrohres (70) auf den Kühldorn (14) aufgeschoben und mit den Wellentälern (68) der gewellten Außenhaut (62) materialschlüssig verbunden wird, wobei die Extrusionsdüse (12) mit mindestens einer ersten Öffnung ausgebildet ist, die in einen ersten Hohlraum (78) zwischen der aus der ersten Ringdüsenöffnung (34) austretenden und an die gewellte Querrippen-Innenfläche (66) der Korrugator-Formbacken (18, 20) angesaugten Außenhaut (62) und der aus der zweiten Ringdüsenöffnung (40) austretenden und auf den Kühldorn (14) aufgeschobenen und mit den Wellentälern (68) der gewellten Außenhaut (62) materialschlüssig verbundenen Innenhaut (64) mündet, und die Extrusionsdüse (12) mit mindestens einer zweiten Öffnung ausgebildet ist, die in einen zweiten Hohlraum (80) zwischen der Innenhaut (64) und dem Kühldorn (14) und dem Innenhaut-Mundstück (26) mündet,
**dadurch gekennzeichnet,**
**daß** die mindestens eine erste Öffnung ein erstes Belüftungsloch (74) und die mindestens eine zweite Öffnung ein zweites Belüftungsloch (76) sind, die mit einem in die Außenumgebung ausmündenden Belüftungskanal (82) verbunden sind, wobei ein Innenhaut-Mundstück (26) einen Endring (36) und ein hülsenförmiges Torpedo-Mundstück (38) aufweist, durch die eine zweite Ringdüsenöffnung (40) bestimmt ist, das mindestens eine erste Belüftungsloch (74) sich radial durch das Torpedo-Mundstück (38) hindurcherstreckt, und das Torpedo-Mundstück (38) an seinem vom Endring (36) abgewandten rückseitigen Ende mit einer sich zu einer ersten Ringdüsenöffnung (34) hin radial nach außen erweiternden Konusfläche (54) und eine Außenhaut-Innenhülse (30) an ihrem vorderseitigen Ende mit einer an die Konusfläche (54) des Torpedo-Mundstückes (38) angepaßten Konusstütz- und -zentrierfläche (52) ausgebildet ist.

2. Vorrichtung nach Anspruch 1,
**dadurch gekennzeichnet,**
**daß** die Extrusionsdüse (12) einen zentralen Innendorn (44), eine den Innendorn (44) konzentrisch umgebende Außenhaut-Innenhülse (30) und die die Außenhaut-Innenhülse (30) konzentrisch umgebende Außenhaut-Außenhülse (28) aufweist, wobei durch die Außenhaut-Innenhülse (30) ein aus der ersten Ringdüsenöffnung (34) ausmündender erster Düsenkanal (32) von einem aus der zweiten Ringdüsenöffnung (40) ausmündenden zweiten Düsenkanal (42) getrennt ist, wobei der erste Düsenkanal (32) und der zweite Düsenkanal (42) entlang der Extrusionsdüse (12) voneinander getrennt sind, und wobei das mindestens eine erste Belüftungsloch (74) und das mindestens eine zweite Belüftungsloch (76) in den im zentralen Innendorn (44) vorgesehenen Belüftungskanal (82) münden.

3. Vorrichtung nach Anspruch 2,
**dadurch gekennzeichnet,**
**daß** am vorderen Endabschnitt des zentralen Innendorns (44) der Kühldorn (14) mit seinem rückseitigen Endabschnitt befestigt ist.

4. Vorrichtung nach Anspruch 2,
**dadurch gekennzeichnet,**
**daß** am vorderen Endabschnitt des zentralen Innendorns (44) vom rückseitigen Ende des Kühldorns (14) beabstandet das die zweite Ringdüsenöffnung (40) aufweisende Innenhaut-Mundstück (26) befestigt ist, wobei das mindestens eine erste Belüftungsloch (74) sich durch den zentralen Innendorn (44) und das Innenhaut-Mundstück (26) hindurcherstreckt und das mindestens eine zweite Belüftungsloch (76) am zentralen Innendorn (44) im Bereich zwischen dem rückseitigen Ende des Kühldorns (14) und dem vorderseitigen Ende des Innenhaut-Mundstückes (26) vorgesehen ist.

5. Vorrichtung nach Anspruch 1,
**dadurch gekennzeichnet,**
**daß** der zentrale Innendorn (44) an seinem vorderseitigen Endabschnitt mit einem Außengewindeabschnitt (46) und daß der Endring (36) des Innenhaut-Mundstückes (26) mit einem daran angepaßten Innengewinde (48) ausgebildet ist und an einer Ringschulter (50) des hülsenförmigen Torpedo-Mundstückes (38) anliegt.

6. Vorrichtung nach Anspruch 5,
**dadurch gekennzeichnet,**
**daß** das Torpedo-Mundstück (38) auf dem zentralen Innendorn (44) spaltfrei angeordnet ist.

7. Vorrichtung nach Anspruch 1,
**dadurch gekennzeichnet,**
**daß** der Kühldorn (14) mit einem Innengewindeabschnitt (60) auf den Außengewindeabschnitt (46) des zentralen Innendornes (44) aufgeschraubt ist.

## Claims

1. Device for producing double-walled corrugated pipes (72) with a corrugated outer pipe (67) and a smooth inner pipe (70), in particular double-walled corrugated pipes (72) with a nominal diameter of ≤40 mm, comprising an extrusion die (12) and a cooling mandrel (14) provided upstream of the extrusion die (12), which project into a moulding passage formed by corrugator moulding jaws (18, 20), wherein the corrugator moulding jaws (18, 20) can be connected along the moulding passage (16) to a vacuum source, the extrusion die (12) has a first die passage (32) with a first annular die opening (34) and a second die passage (42) with a second annular die opening (40), the first annular die opening (34) is provided for the delivery of an outer shell (62), which to form the corrugated outer pipe (67) in the moulding passage (16) is sucked against the corrugated transversely ribbed inner surface (66) of the corrugator moulding jaws (18, 20) and the second annular die opening (40) is provided for the delivery of an inner shell (64), which to form the smooth inner pipe (70) is pushed onto the cooling mandrel (14) and is connected in a material-locking manner to the corrugation troughs (68) of the corrugated outer shell (62), wherein the extrusion die (12) is formed with at least one first opening, which opens into a first cavity (78) between the outer shell (62) issuing from the first annular die opening (34) and sucked against the corrugated transversely ribbed inner surface (66) of the corrugator moulding jaws (18, 20) and the inner shell (64) issuing from the second annular die opening (40) and pushed onto the cooling mandrel (14) and connected in a material-locking manner to the corrugation troughs (68) of the corrugated outer shell (62), and the extrusion die (12) is formed with at least one second opening, which opens into a second cavity (80) between the inner shell (64) and the cooling mandrel (14) and the inner shell mouthpiece (26), **characterized in that** the at least one first opening is a first venting hole (74) and the at least one second opening is a second venting hole (76), which are connected to a venting passage (82) which opens out into the outside atmosphere, an inner shell mouthpiece (26) having an end ring (36) and a sleeve-shaped torpedo mouthpiece (38), by which a second annular die opening (40) is defined, the at least one first venting hole (74) extending radially through the torpedo mouthpiece (38), and the torpedo mouthpiece (38) being formed at its rearward end remote from the end ring (36) with a cone surface (54) enlarging radially outwardly towards a first annular die opening (34) and an outer shell inner sleeve (30) being formed at its front end with a cone supporting and centring surface (52), which is matched to the cone surface (54) of the torpedo mouthpiece (38).

2. Device according to Claim 1, **characterized in that** the extrusion die (12) has a central inner mandrel (44), an outer shell inner sleeve (30) concentrically surrounding the inner mandrel (44) and an outer shell outer sleeve (28) concentrically surrounding the outer shell inner sleeve (30), wherein a first die passage (32) opening out from the first annular die opening (34) is separated from a second die passage (42) opening out from the second annular die opening (40) by the outer shell inner sleeve (30), wherein the first die passage (32) and the second die passage (42) are separated from each other along the extrusion die (12), and wherein the at least one first venting hole (74) and the at least one second venting hole (76) open into the venting passage (82) provided in the central inner mandrel (44).

3. Device according to Claim 2, **characterized in that** the cooling mandrel (14) is fixed with its rearward end portion to the front end portion of the central inner mandrel (44).

4. Device according to Claim 2, **characterized in that** the inner shell mouthpiece (26), having the second annular die opening (40), is fixed to the front end portion of the central inner mandrel (44), spaced from the rearward end of the cooling mandrel (14), wherein the at least one first venting hole (74) extends through the central inner mandrel (44) and the inner shell mouthpiece (26) and the at least one second venting hole (76) is provided on the central inner mandrel (44) in the region between the rearward end of the cooling mandrel (14) and the front end of the inner shell mouthpiece (26).

5. Device according to Claim 1, **characterized in that** the central inner mandrel (44) is formed at its front end portion with an externally threaded portion (46) and **in that** the end ring (36) of the inner shell mouthpiece (26) is formed with an internal thread (48) matching it and bears against an annular shoulder (50) of the sleeve-shaped torpedo mouthpiece (38).

6. Device according to Claim 5, **characterized in that** the torpedo mouthpiece (38) is arranged without a gap on the central inner mandrel (44).

7. Device according to Claim 1, **characterized in that** the cooling mandrel (14) is screwed with an internally threaded portion (60) onto the externally threaded portion (46) of the central inner mandrel (44).

## Revendications

1. Dispositif destiné à la réalisation de tubes ondulés (72) à double paroi avec un tube extérieur ondulé (67) et un tube intérieur lisse (70), en particulier des tubes ondulés (72) à double paroi avec un diamètre nominal ≤ 40 mm, comportant une filière d'extrusion (12) et un mandrin de refroidissement (14) prévu en amont de la filière d'extrusion (12), lesquels s'engagent dans un canal de formage formé par des mâchoires de formage de type corrugateur (18, 20), les mâchoires de formage de type corrugateur (18, 20) le long du canal de formage (16) pouvant être reliées à une source sous vide, la filière d'extrusion (12) comportant un premier conduit (32) avec un orifice annulaire (34) et un deuxième conduit (42) avec un deuxième orifice annulaire (40), le premier orifice annulaire (34) étant prévu pour la mise en forme d'une paroi extérieure (62) qui, pour former le tube extérieur ondulé (67) dans le canal de formage (16), est aspirée contre la face intérieure à nervures transversales (66) ondulée des mâchoires de formage de type corrugateur (18, 20), et le deuxième orifice annulaire (40) étant prévu pour la mise en forme d'une paroi intérieure (64) qui, pour former le tube intérieur lisse (70), est emmanchée sur le mandrin de refroidissement (14) et est assemblée par fusion de matière avec les concavités (68) de la paroi extérieure ondulée (62), la filière d'extrusion (12) étant réalisée avec au moins un orifice qui débouche dans une première cavité (78) entre la paroi extérieure (62), sortant de l'orifice annulaire (34) et aspirée contre la face intérieure à nervures transversales (66) ondulée des mâchoires de formage de type corrugateur (18, 20), et la paroi intérieure (64) emmanchée sur le mandrin de refroidissement (14) et liée par fusion de matière avec les concavités (68) de la paroi extérieure ondulée (62), et la filière d'extrusion (12) étant réalisée avec au moins un deuxième orifice qui débouche dans une deuxième cavité (80) entre la paroi intérieure (64) et le mandrin de refroidissement (14) et la filière pour paroi intérieure (26),
**caractérisé en ce que** ledit au moins un premier orifice est un premier trou d'aération (74) et ledit au moins un deuxième orifice est un deuxième trou d'aération (76), lesquels communiquent avec un conduit d'aération (82) débouchant dans l'environnement extérieur, une filière pour paroi intérieure (26) comportant une bague d'extrémité (36) et une filière torpille (38) en forme de manchon, qui détermine un deuxième orifice annulaire (40), ledit au moins un premier trou d'aération (74) passe radialement à travers la filière torpille (38), et la filière torpille (38) est réalisée au niveau de son extrémité postérieure, détournée de la bague d'extrémité (36), avec une surface conique (54), qui s'évase radialement vers l'extérieur vers un premier orifice annulaire (34), et une gaine intérieure (30) pour paroi extérieure au niveau de son extrémité antérieure est réalisée avec une face d'appui et de centrage conique (52) ajustée à la surface conique (54) de la filière torpille (38).

2. Dispositif selon la revendication 1, **caractérisé en ce que** la filière d'extrusion (12) comporte un mandrin intérieur (44) central, une gaine intérieure (30) pour paroi extérieure, entourant concentriquement le mandrin intérieur (44), et la gaine extérieure (28) pour paroi extérieure, entourant concentriquement la gaine intérieure (30) pour paroi extérieure, un premier conduit de filière (32), débouchant hors du premier orifice annulaire (34), étant séparé d'un deuxième conduit de filière (42) débouchant hors du deuxième orifice annulaire (40), le premier conduit de filière (32) et le deuxième conduit de filière (42) étant séparés l'un de l'autre le long de la filière d'extrusion (12), et ledit au moins un premier trou d'aération (74) et ledit au moins un deuxième trou d'aération (76) débouchant dans le conduit d'aération (82) prévu dans le mandrin intérieur (44) central.

3. Dispositif selon la revendication 2, **caractérisé en ce que** le mandrin de refroidissement (14) est fixé avec son tronçon d'extrémité postérieur contre le tronçon d'extrémité antérieur du mandrin intérieur (44) central.

4. Dispositif selon la revendication 2, **caractérisé en ce que** la filière pour paroi intérieure (26), munie du deuxième orifice annulaire (40), est fixée contre le tronçon d'extrémité antérieur du mandrin intérieur (44) central à distance de l'extrémité postérieure du mandrin de refroidissement (14), ledit au moins un premier trou d'aération (74) passant à travers le mandrin intérieur (44) central et la filière pour paroi intérieure (26) et ledit au moins un deuxième trou d'aération (76) étant prévu sur le mandrin intérieur (44) central dans la zone entre l'extrémité postérieure du mandrin de refroidissement (14) et l'extrémité antérieure de la filière pour paroi intérieure (26).

5. Dispositif selon la revendication 1, **caractérisé en ce que** le mandrin intérieur (44) central est réalisé avec un tronçon fileté (46) au niveau de son tronçon d'extrémité antérieur et **en ce que** la bague d'extrémité (36) de la filière pour paroi intérieure (26) est réalisée avec un taraudage (48) adapté et est en appui contre un épaulement annulaire (50) de la filière torpille (38) en forme de manchon.

6. Dispositif selon la revendication 5, **caractérisé en ce que** la filière torpille (38) est agencée sans laisser de fente sur le mandrin intérieur (44) central.

7. Dispositif selon la revendication 1, **caractérisé en ce que** le mandrin de refroidissement (14) est vissé avec un tronçon taraudé (60) sur le tronçon fileté (46) du mandrin intérieur (44) central.
